# EUROPÄISCHE PATENTSCHRIFT

(11) **EP 1 421 550 B1**
(45) Veröffentlichungstag und Bekanntmachung des Hinweises auf die Patenterteilung: **02.08.2006**
(21) Anmeldenummer: 02767391.2
(22) Anmeldetag: 14.08.2002
(51) Int. Cl.: G06K 19/073, G06K 19/077

(54) **HALBLEITERSCHALTUNGSANORDNUNG MIT BIOMETRISCHEM SENSOR UND AUSWERTEEINHEIT**
SEMICONDUCTOR CIRCUIT ARRANGEMENT WITH A BIOMETRIC SENSOR AND EVALUATION UNIT
SYSTEME DE CIRCUIT A SEMI-CONDUCTEUR DOTE D'UN CAPTEUR BIOMETRIQUE ET D'UNE UNITE D'INTERPRETATION

(30) Priorität: 17.08.2001 DE 10139414
(43) Veröffentlichungstag der Anmeldung: 26.05.2004
(73) Patentinhaber: Giesecke & Devrient GmbH, 81677 München (DE)
(72) Erfinder: GRASSL, Thomas, 85354 Freising (DE); SEIDEMANN, Wolfram, 81825 München (DE)
(74) Vertreter: Höhfeld, Jochen
(86) Internationale Anmeldenummer: PCT/EP2002/009138
(87) Internationale Veröffentlichungsnummer: WO 2003/017194

(56) Entgegenhaltungen:
- WO-A-01/31577
- DE-A- 19 928 733
- DE-C- 19 511 775
- GB-A- 2 243 235
- SHIGEMATSU S. ET AL: 'A SINGLE-CHIP FINGERPRINT SENSOR AND IDENTIFIER' IEEE JOURNAL OF SOLID-STATE CIRCUITS, IEEE INC. Bd. 34, Nr. 12, Dezember 1999, NEW YORK, US, Seiten 1852 - 1859, XP000861834

## Beschreibung

Die Erfindung betrifft eine Halbleiterschaltungsanordnung mit biometrischem Sensor und Auswerteeinheit zum Auswerten von vom Sensor abgegebener Information. Außerdem betrifft die Erfindung eine Tragbare Datenträgeranordnung mit biometrischem Sensor zum Erfassen biometrischer Information, mit einer Speicheranordnung zum Speichern von Referenzdaten und mit einer Auswerteeinheit zum Vergleichen von auf der Grundlage der erfassten biometrischen Information ermittelter Verifikatiorisdaten mit den gespeicherten Referenzdaten

Eine entsprechende, aus einem Fingerabdrucksensorchip und einem Chipkartenchip bestehende Halbleiterschaltungsanordnung ist beispielsweise aus DE 198 03 020 C2 und aus DE 196 48 767 A1 bekannt.

Bei solchen Halbleiterschaltungsanordnungen besteht eine angreifbare Verbindung zwischen Sensor und Auswerteeinheit, was ein Sicherheitsrisiko für manche Anwendungen darstellt. In der Zeitschrift PROTECTOR, Ausgabe 6-7/98, S. 46, letzter Absatz der rechten Spalte des Artikels "Telefon erkennt Finger" wurde diesbezüglich angedacht, die Auswerteeinheit auf den Sensorchip zu integrieren.

Der Artikel SHIGEMATSU S; ET AL: "A SINGLE-CHIP FINGERPRINT SENSOR AND IDENTIFIER" IEEE JOURNAL OF SOLID-STATE CIRCUITS, IEEE INC., Bd. 34, Nr. 12, Dezember 1999 (1999-12), Seiten 1852-1859, NEW YORK, US offenbart eine Halbleiterschaltungsanordnung mit den Merkmalen der Präambel des Anspruchs 1 in der eine Halbleiterschicht mit einem biometrischen Sensor auf einer Halbleiterschicht angeordnet ist, die die Auswerteschaltung enthält.

Biometrische Sensoren sind Hardwarekomponenten zum Erfassen biometrischer Information und zum Abgeben dieser Information an eine Auswerteeinheit. Biometrische Information ist die einer Person eigene Information, z.B. bezüglich personentypischer Besonderheiten wie Hand- oder Fingergeometrie, das Gesichtsbild, Iris oder Augenhintergrund, Stimme oder Signaturdynamik, aber auch zustandsbedingte aktuelle Informationen wie z.B. Blutzuckerspiegel, Blutdruck oder Herzfrequenz. Bei biometrischen Vergleichsverfahren werden die vom biometrischen Sensor gelieferten Daten nicht vollständig abgespeichert und verglichen, sondern eine Auswerteeinheit wendet auf die vom Sensor abgegebene Information einen Merkmal-Extraktions-Algorithmus zum Extrahieren charakteristischer Merkmale aus diesen Daten an, um Referenzdaten und auch Verifikationsdaten zu ermitteln. Die vom biometrischen Sensor gelieferte Information wird beispielsweise als Verifikationsdaten in der Auswerteeinheit mit Hilfe eines Merkmals-Vergleichs-Algorithmus mit vorher erfaßten, gespeicherten Referenzdaten verglichen. Es wird eine Vergleichsgröße berechnet, die eine erfolgreiche Verifikation und somit Authentisierung feststellt, falls die Vergleichsgröße innerhalb vorgegebener Toleranzgrenzen bezüglich der Referenzgröße liegt. Bei einer Identifikation wird eine Person als Referenzperson erkannt, mit deren Referenzgröße die Vergleichsgröße eine Mindestübereinstimmung hat und die beste verfügbare Übereinstimmung anzeigt. Als Sensoren können für viele Anwendungen kapazitive, optische oder druckempfindliche Sensorchips mit integrierten Halbleiterstrukturen verwendet werden.

In vielen Fällen erfordert die biometrische Information, die durch solche biometrische Sensoren aufgenommen werden soll, wie z.B. Fingerabdruckinformation, Gesichtskonturinformation, Unterschriftendynamikinformation, Netzhaut- oder Irismusterinformation, eine relativ grobe Auflösung. Hierzu geeignete Sensoren zeichnen sich üblicherweise durch größere räumliche Ausdehnung und relativ grobe Halbleiterstrukturen aus. Eine Realisierung von Auswerteeinheit und Sensoreinheit auf einem Chip würde zu einer sehr großen Chipfläche führen, wobei der Chip bezüglich Sensor oder bezüglich Auswerteeinheit nicht kostenoptimiert sein könnte. Ein großer Chip kann in flexiblen Datenträgeranordnungen nur unter Anwendung von die Flexibilität beeinträchtigenden Zusatzmaßnahmen wie Versteifungsrahmen eingesetzt werden.

Aufgabe der vorliegenden Erfindung ist es, eine verbesserte Halbleiterschaltungsanordnung mit biometrischem Sensor und Auswerteeinheit anzugeben.

Diese Aufgabe löst die Erfindung für eine Halbleiterschaltungsanordnung mit biometrischem Sensor und Auswerteeinheit zum Auswerten von vom Sensor abgegebener Information durch die im kennzeichnenden Teil des Anspruchs 1 angegebenen Maßnahmen. Günstige Weiterbildungen der Erfindung sind Gegenstand der Unteransprüche.

Außerdem soll eine verbesserte tragbare Datenträgeranordnung angegeben werden, mit biometrischem Sensor zum Erfassen biometrischer Information, mit einer Speicheranordnung zum Speichern von Referenzdaten und mit einer Auswerteeinheit zum Vergleichen von auf der Grundlage der erfassten biometrischen Information ermittelter Verifikationsdaten mit den gespeicherten Referenzdaten. Eine entsprechende Datenträgeranordnung ist Gegenstand des Anspruchs 11.

Eine erfindungsgemäße Halbleiterschaltungsanordnung besteht aus mindestens zwei Halbleiterschaltungsschichten, die übereinander angeordnet sind, wobei Halbleitersegmente der oben liegenden Halbleiterschaltungsschicht mit Halbleitersegmenten der darunter liegenden Halbleiterschaltungsschicht elektrisch leitend verbunden sind. Der biometrische Sensor ist in der oben liegenden Halbleiterschaltungsschicht realisiert und die Auswerteeinheit ist in einer darunter liegenden Halbleiterschaltungsschicht realisiert. Die den Sensor bildende Halbleiterschaltungsschicht ragt mindestens an einer Seite über die Halbleiterschaltungsschicht der Auswerteeinheit hinaus. Durch das Übereinanderstapeln mehrerer Halbleiterschaltungsschichten können die einzelnen Halbleiterschaltungsschichten, insbesondere alle bis auf die unterste Halbleiterschaltungsschicht, in bekannter Weise sehr dünn ausgebildet werden. Außerdem können die zwischen den einzelnen Halbleiterschaltungsschichten vorhandenen Verbindungen von außen unzugänglich gestaltet werden und sind somit gegen Angriffe von außen geschützt.

Eine vorteilhafte erfindungsgemäße Halbleiterschaltungsanordnung sieht für verschiedene Halbleiterschaltungsschichten unterschiedliche Halbleitertechnologien vor. Dadurch kann die den Sensor bildende Schicht beispielsweise mit groben Halbleiterstrukturen realisiert werden, die weniger strenge Prozeßtoleranz, weniger aufwendige Lithographie-Prozesse und ggf. weniger Herstellungsverfahrensschritte erfordern als feinstrukturierte Technologien zum Herstellen von Prozessoren und Speichern für die Auswerteeinheit.

Insbesondere, wenn biometrische Sensorchips mit größeren Abmessungen benötigt werden und gewisse Mindestanforderungen an die Flexibilität der Halbleiterschaltungsanordnung gestellt werden, kann in einer vorteilhaften Weiterbildung der erfindungsgemäßen Halbleiterschaltungsanordnung der Sensor auf Kunststoffsubstrat aufgebracht sein. Solche Strukturen auf Kunststoffsubstrat sind beispielsweise aus der Druckschrift US 5,796,121 oder der Druckschrift US 5,612,228 bekannt. In diesem Fall kann die Auswerteeinheit entweder ebenfalls auf einem Kunststoffsubstrat realisiert werden, oder aber auch auf einer üblichen Halbleitersubstratschicht, z.B. auf Silizium, ausgebildet sein.

Da die oberste Halbleiterschaltungsschicht aufgrund der zu erfassenden Einheit eine größere Ausdehnung benötigt, muß, um nicht erforderliche Chipfläche der Auswerteeinheit zu sparen und/oder um die Flexibilität der Halbleiterschaltungsanordnung zu erhöhen, die den Sensor bildende Halbleiterschaltungsschicht an einer oder mehreren Seiten über die weitere Halbleiterschaltungsschicht der Auswerteeinheit hinausragen.

Eine für Authentisierungs- oder Identifizierungsvorgänge vorgesehene erfindungsgemäße Halbleiterschaltungsanordnung sieht vor, daß biometrische Vergleichsdaten in einer Speicheranordnung der Halbleiterschaltungsanordnung gespeichert sind und die Auswerteeinheit diese biometrischen Vergleichsdaten mit von dem biometrischem Sensor empfangener Information vergleicht. Wenn die Vergleichsdaten hierbei mit der Auswerteeinheit in einer unteren Halbleiterschaltungsschicht der Halbleiterschaltungsanordnung gespeichert sind, sind diese von außen nicht ohne erheblichen Aufwand zugänglich. Durch eine derart ausgestaltete erfindungsgemäße Halbleiterschaltungsanordnung wird folglich die Sicherheit zu schützender Daten erhöht und die Zuverlässigkeit einer mit einer solchen Anordnung realisierten Authentisierungs- oder Identifizierungseinheit verbessert.

Vorzugsweise sind die elektrisch leitenden Verbindungen zwischen Halbleiterschaltungselementen von übereinander angeordneten Halbleiterschaltungsschichten mit Hilfe von vertikal durch eine der Halbleiterschaltungsschichten verlaufende Verbindungen realisiert.

Dadurch ist ein zerstörungsfreier Zugang zu diesen Verbindungen nur mit extrem hohem technischem Aufwand realisierbar.

Der biometrische Sensor in einer erfindungsgemäßen Halbleiterschaltungsanordnung kann beispielsweise zur Realisierung eines Sensors zur Erkennung eines Fingerabdrucks oder eines Sensors zur Erkennung einer Signaturdynamik als kapazitiver Sensor ausgebildet sein. Zur Realisierung einer Fingerabdruckerkennung oder einer anderen bildlichen Erkennung kann vorzugsweise auch ein optischer Sensor als Biometriesensor eingesetzt werden.

Nachstehend wird die Erfindung anhand von Ausführungsbeispielen unter Bezugnahme auf die Figuren der Zeichnung näher erläutert.

Es zeigt:
- Fig.1: die schematische Schnittdarstellung durch ein Ausführungsbeispiel einer erfindungsgemäßen Halbleiterschaltungsanordnung;
- Fig. 2: die schematische Blockdarstellung einer Datenträgeranordnung mit einer Ausgestaltungsform einer erfindungsgemäßen Halbleiterschaltungsanordnung;
- Fig. 3: einen Ausschnitt einer schematischen Schnittdarstellung durch eine erfindungsgemäße Halbleiterschaltungsanordnung; die in eine kontaktbehaftete Chipkarte eingesetzt ist;
- Fig. 4: eine schematische Darstellung einer teilweise fertiggestellten kontaktlosen Chipkarte unter Verwendung eines weiteren Ausführungsbeispiels einer erfindungsgemäßen Halbleiterschaltungsanordnung und
- Fig. 5: eine schematische Schnittdarstellung durch einen Ausschnitt der in Fig. 4 gezeigten Anordnung.

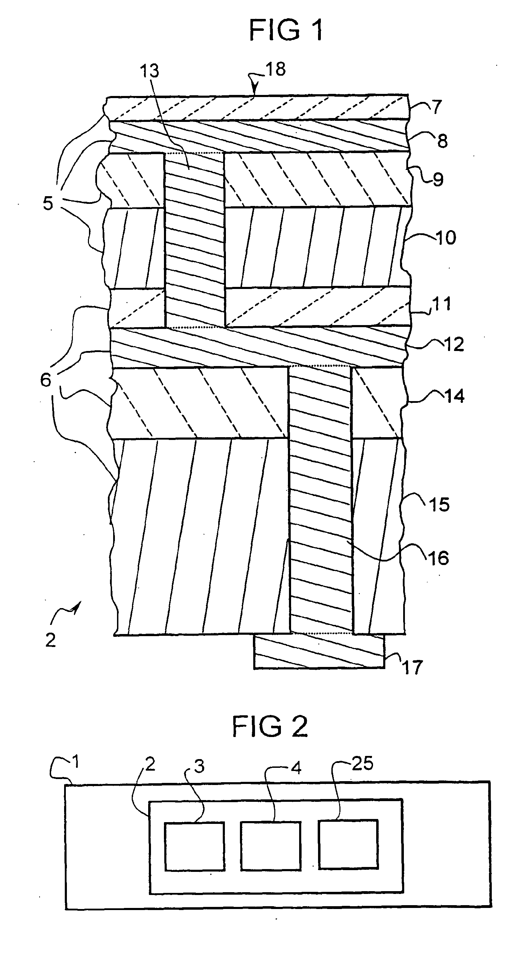

Fig. 1 zeigt ein Ausführungsbeispiel einer erfindungsgemäßen Halbleiterschaltungsanordnung mit einer obenliegenden Halbleiterschaltungsschicht 5 und einer darunter angeordneten Halbleiterschaltungsschicht 6. In Fig. 1 sind elektrisch leitende Materialien enthaltende Bereiche mit leicht fallender Schraffur dargestellt, aktive Halbleiterbereiche mit stärker fallender unterbrochen linierter Schraffur, Substratbereiche mit stark steigender Schraffur und isolierende Passivierungsschichten mit weniger stark steigender unterbrochen linierter Schraffur. Die in Fig.1 dargestellte obenliegende Halbleiterschaltungsschicht 5 besteht aus einer oberen Passierungsschicht 7, deren Oberfläche die Oberseite 18 der Halbleiterschaltungsanordnung 2 bildet. Unter dieser Passivierungsschicht ist eine innerhalb der oberen Halbleiterschaltungsschicht Verbindungen zwischen den einzelnen Halbleiterelementen realisierende Metallisierungsschicht 8 vorgesehen. Die Metallisierungsschicht 8 ist oberhalb einer aktiven Halbleiterschicht 9 mit Halbleiterschaltungselementen angeordnet und ist nicht, wie schematisch dargestellt, homogen. Sie besteht vielmehr aus metallischen oder metallhaltigen Verbindungen zwischen einzelnen Bereichen der darunter liegenden aktiven Halbleiterschicht 9 und aus isolierenden Bereichen zwischen den Verbindungen. Diese aktive Schicht 9 ist auf einem Substrat 10, beispielsweise Kunststoffsubstrat, aufgebracht. Die Unterseite des Substrats 10 ist auf der Oberseite einer Passivierungsschicht 11 der weiteren Halbleiterschaltungsschicht 6 angebracht. In der schematischen Darstellung sind hierbei keine Fügemittel dargestellt, geeignete Verbindungsverfahren wie Kleben oder Löten sind dem Fachmann jedoch einschlägig bekannt. Unterhalb der erwähnten Passivierungsschicht 11 der weiteren Halbleiterschaltungsschicht 6 ist eine Metallisierungsschicht 12 dieser zweiten Halbleiterschaltungsschicht 6 angeordnet, die zum elektrischen Verbinden von in einer unterhalb der Metallisierungsschicht 12 vorgesehenen aktiven Schicht 14 enthaltenen Halbleiterbauelementen dient. In der Schnittdarstellung der Fig. 1 ist zu erkennen, daß zwischen der Metallisierungsschicht 8 der obenliegenden Halbleiterschaltungsschicht 5 und der Metallisierungsschicht 12 der untenliegenden Halbleiterschaltungsschicht 6 eine vertikale Durchkontaktierung 13 durch die obere Halbleiterschaltungsschicht 5 vorgesehen ist. Wenn in der Darstellung gemäß Fig.1 nur eine schematische Verbindung zwischen Schichten 8 und 12 dargestellt ist, so ist selbstverständlich, daß im tatsächlichen Anwendungsfall spezielle Bereiche der Metallisierungsschicht 8 der oberen Halbleiterschaltungsanordnung mit speziellen Bereichen der Metallisierungsschicht 12 der unteren Halbleiterschaltungsschicht 6 verbunden sind.

Die erwähnte aktive Schicht 14 der unteren Halbleiterschaltungsschicht 6 ist auf einem Substrat 15, beispielsweise Siliziumsubstrat aufgebracht bzw. durch entsprechende Verfahrensschritte oberhalb dieser Substratschicht in einem monolithischen Material eingebracht.

In dem in Fig. 1 dargestellten Ausführungsbeispiel ist ein externes Anschlußelement 17 der Halbleiterschaltungsanordnung 2 an der Unterseite der Substratschicht 15 angeordnet und ist über eine vertikal durch die untere Halbleiterschaltungsschicht 2 verlaufende Verbindung 16 mit der Metallisierungsschicht 12 bzw. Elementen dieser Metallisierungsschicht 12 verbunden.

In der obenliegenden Halbleiterschaltungsschicht 5 des Ausführungsbeispiels gemäß Fig. 1 ist ein biometrischer Sensor realisiert, während in der unteren Halbleiterschaltungsschicht 6 eine Auswerteeinheit realisiert ist.

Fig. 2 zeigt in schematischer Blockdarstellung eine Datenträgeranordnung 1 mit einer Halbleiterschaltungsanordnung 2. Die Halbleiterschaltungsanordnung 2 enthält einen biometrischen Sensor 3, eine Auswerteeinheit 4 und eine Speicheranordnung 25. Wie bereits erwähnt, sind von den in Fig. 2 gezeigten Funktionsblöcken in dem Ausführungsbeispiel gemäß Fig. mindestens der biometrische Sensor 3 in der obenliegenden Halbleiterschaltungsschicht 5 und mindestens die Auswerteeinheit 4 in der untenliegenden Halbleiterschaltungsschicht 6 realisiert. Vorzugsweise ist auch der Speicher 25 in den untenliegenden Halbleiterschaltungsschicht 6 realisiert, um einen externen Zugriff auf den Speicher zu erschweren.

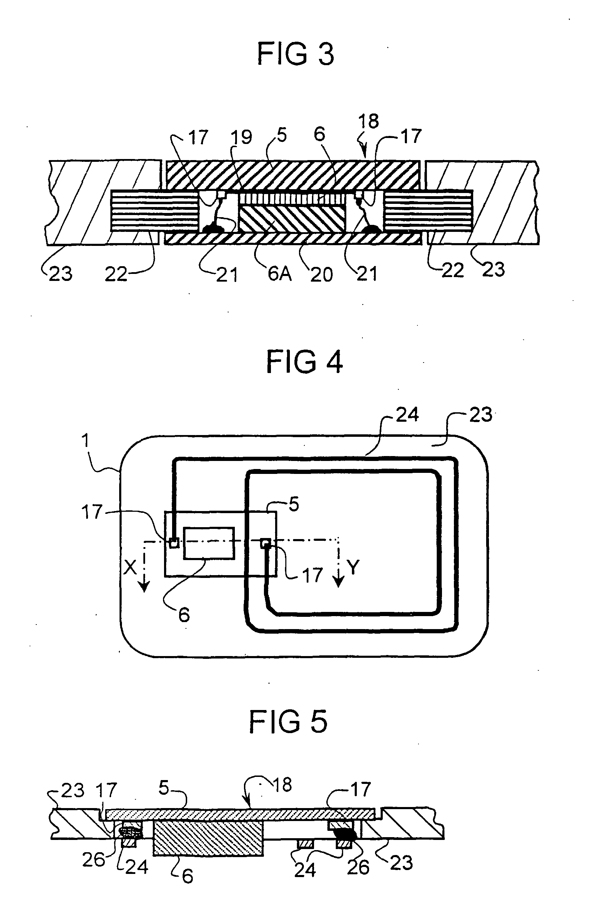

Fig. 3 zeigt in schematischer Schnittdarstellung eine aus drei Halbleiterschaltungsschichten 5, 6 und 6A aufgebaute Halbleiterschaltungsanordnung eingebaut in ein kontaktbehaftetes Chipkartenmodul mit externen metallischen Anschlüssen 20 einer kartenförmigen Datenträgeranordnung. In dem Ausführungsbeispiel nach Fig. 3 ist eine erste, obere Halbleiterschaltungsschicht 5 zur Realisierung eines Fingerabdrucksensors vorgesehen, deren Oberfläche die Oberseite 18 der Halbleiterschaltungsanordnung bildet. Die Halbleiterschaltungsanordnung hat unterhalb der ersten Halbleiterschaltungsschicht 5 eine erste weitere Halbleiterschaltungsschicht 6 und eine zweite weitere Schaltungsschicht 6A, wobei in einer dieser weiteren Halbleiterschaltungsschichten 6, 6A eine Auswerteeinheit realisiert ist. Vorzugsweise in der mittleren Halbleiterschaltungsschicht 6 sind sicherheitsrelevante Funktionseinheiten der Halbleiterschaltungsanordnung realisiert. In dem in Fig. 3 darstellten Ausführungsbeispiel ragt die oberste Halbleiterschaltungsschicht 5 erfindungsgemäß auf zwei Seiten über die unteren Halbleiterschaltungsschichten 6 und 6A hinaus. Aus praktischen Gründen sind daher Anschlußelemente 17 der Halbleiterschaltungsanordnung an der Unterseite der oberen Halbleiterschaltungsschicht 5 außerhalb des Bereiches, der mit der Halbleiterschaltungsschicht 6 verbunden ist, anordnet. Diese Anschlußelemente 17 sind über eine schematisch dargestellte Verbindungsanordnung 19 mit aktiven Bereichen der Halbleiterschaltungsanordnung verbunden. Die Unterseite der Halbleiterschaltungsanordnung, also eine nicht explizit dargestellte Substratschicht der untersten Halbleiterschaltungsschicht 6A ist auf die externen metallischen Anschlüsse 20 der Datenträgeranordnung angebracht. Diese externen metallischen Anschlüsse 20 sind über mit ihnen verbundene Verbindungsleitungen 21 mit den Anschlußelementen 17 der Halbleiterschaltungsanordnung verbunden. In der in Fig. 3 dargestellten Ausgestaltungsform ist die oberste Halbleiterschaltungsschicht 5, die den biometrischen Sensor enthält, relativ dick ausgestaltet und die Gesamtanordnung hat in etwa die gleiche Dicke wie der Kartenkörper 23 der Datenträgeranordnung. Kapazitive Fingerabdrucksensoren haben oft eine solche relativ große Materialstärke. Erforderlichenfalls kann diese Dicke des Chipmoduls in nicht dargestellter Weise durch Füllmaterial variiert werden. Die aus den Schichten 5, 6 und 6A bestehende Halbleiterschaltungsanordnung und die externen metallischen Anschlüsse 20 der Datenträgeranordnung sind über einen Träger aus elastischem Trägermaterial 22 mit dem Kartenkörper 23 verbunden. Die elastische Aufhängung mit Hilfe des elastischen Trägermaterials 22 verhindert hierbei das Übertragen von Biegespannungen vom Kartenmaterial 23 auf die Halbleiterschaltungsanordnung.

Fig. 4 zeigt eine teilweise fertiggestellte Datenträgeranordnung 1 mit einer Ausgestaltungsform einer erfindungsgemäßen Halbleiterschaltungsanordnung, die aus einer oberen Halbleiterschaltungsschicht 5 und einer weiteren Halbleiterschaltungsschicht 6 besteht. In der Darstellung der Fig. 4 wird hierbei von unten auf die Halbleiterschaltungsanordnung geblickt. Verdeckte Kanten sind in Fig. 4 aufgrund der besseren Übersichtlichkeit nicht dargestellt. Auch bei der Halbleiterschaltungsanordnung des Ausführungsbeispiels gemäß Fig. 4 ist die erste, obere Halbleiterschaltungsschicht 5, die den biometrischen Sensor bildet, mit einer größeren Fläche versehen als die weitere Halbleiterschaltungsschicht 6 und ragt seitlich über die weitere Halbleiterschaltungsschicht hinaus. Tatsächlich ist die Flächenausdehnung der Halbleiterschaltungsschicht 5 größer als in der Fig. 4 dargestellt, da in der Fig. 4 nur die Öffnung innerhalb einer Kartenkörperschicht 22 dargestellt ist und die Halbleiterschaltungsschicht 5, wie in Fig. 5 gezeigt, seitlich über diese Öffnung hinausragt. Auch in dem Ausführungsbeispiel gemäß Fig. 4 sind zwei Anschlußelemente 17 der Halbleiterschaltungsanordnung dargestellt, die auf der Unterseite der ersten Halbleiterschaltungsschicht 5 in dem von der weiteren Halbleiterschaltungsschicht 6 nicht abgedeckten Bereich angeordnet sind. Diese Anschlußelemente 17 der Halbleiterschaltungsanordnung sind mit den beiden Enden einer Flachspule 24 verbunden. Der in Fig. 4 dargestellte Teil der Datenträgeranordnung 1 wird zur Fertigstellung der Karte noch mit einer Kunststoffabdeckung verschlossen.

Fig. 5 zeigt einen Schnitt entlang der Schnittlinie X-Y durch die Datenträgeranordnung und die Halbleiterschaltungsanordnung gemäß Fig. 4. Hierbei ist die obenliegende Halbleiterschaltungsschicht 5 zur Realisierung des Sensors zu erkennen, deren Oberseite die Oberseite 18 der Halbleiterschaltungsanordnung bildet. Wie bereits erwähnt, ragt die oberste Halbleiterschaltungsschicht 5 erfindungsgemäß über die unter ihr befindliche weitere Halbleiterschaltungsschicht 6 hinaus und liegt mit dem äußeren Rand auf einem Kartenkörper 23 auf. An der nicht von der weiteren Halbleiterschaltungsschicht 6 eingenommenen Unterseite der oberen Halbleiterschaltungsschicht 5 sind die Anschlußelemente 17 der Halbleiterschaltungsanordnung zu erkennen, die über Fügemittel 26, wie z. B. Leitkleber oder Lot mit den Enden der Spule 24 verbunden sind.

## Patentansprüche

1. Halbleiterschaltungsanordnung (2), insbesondere zum Einbau in eine tragbare Datenträgeranordnung (1), mit biometrischem Sensor (3) und Auswerteeinheit (4) zum Auswerten von vom Sensor (3) abgegebener Information, wobei die Halbleiterschaltungsanordnung (2) aus mindestens einer ersten, oberen Halbleiterschaltungsschicht (5) und mindestens einer unterhalb der ersten Halbleiterschaltungsschicht (5) angeordneten weiteren Halbleiterschaltungsschicht (6, 6A) besteht, wobei Halbleiterschaltungselemente der ersten Halbleiterschaltungsschicht (5) mit Halbleiterschaltungselementen der weiteren Halbleiterschaltungsschicht (6, 6A) elektrisch leitend verbunden sind, und daß die erste Halbleiterschaltungsschicht (5) den biometrischen Sensor (3) enthält und die Auswerteeinheit (4) in der weiteren Halbleiterschaltungsschicht (6, 6A) realisiert ist **dadurch gekennzeichnet, daß** die erste, den biometrischen Sensor (3) enthaltende Halbleiterschaltungsschicht (5) mindestens an einer Seite über die weitere Halbleiterschaltungsschicht (6, 6A) hinausragt.

2. Halbleiterschaltungsanordnung (2) nach Anspruch 1, **dadurch gekennzeichnet, daß** die erste Halbleiterschaltungsschicht (5) und die weitere Halbleiterschaltungsschicht (6, 6A) unterschiedliche Halbleitertechnologien verwenden.

3. Halbleiterschaltungsanordnung (2) nach einem der vorhergehenden Ansprüche, **dadurch gekennzeichnet, daß** die weitere Halbleiterschaltungsschicht (6, 6A) feinere Halbleiterstrukturen hat als die erste Halbleiterschaltungsschicht.

4. Halbleiterschaltungsanordnung (2) nach einem der vorhergehenden Ansprüche, **dadurch gekennzeichnet, daß** die erste Halbleiterschaltungsschicht auf Kunststoffsubstrat (10) aufgebaut ist und die weitere Halbleiterschaltungsschicht (6, 6A) auf Halbleitersubstrat (15).

5. Halbleiterschaltungsanordnung (2) nach Anspruch 4, **dadurch gekennzeichnet, daß** das Halbleitersubstrat (15) Silizium ist.

6. Halbleiterschaltungsanordnung (2) nach einem der vorhergehenden Ansprüche, **dadurch gekennzeichnet, daß** biometrische Vergleichsdaten in einer Speicheranordnung (25) der Halbleiterschaltungsanordnung (2) gespeichert sind und die Auswerteeinheit (4) diese biometrischen Vergleichsdaten mit von dem biometrischen Sensor (3) empfangener Information vergleicht.

7. Halbleiterschaltungsanordnung (2) nach einem der vorhergehenden Ansprüche, **dadurch gekennzeichnet, daß** Verbindungen zwischen Halbleiterschaltungselementen von übereinander angeordneten Halbleiterschaltungsschichten (5, 6, 6A) mit Hilfe von vertikal durch eine der Halbleiterschaltungsschichten (5) verlaufende Verbindungen (13) realisiert sind.

8. Halbleiterschaltungsanordnung (2) nach einem der vorhergehenden Ansprüche, **dadurch gekennzeichnet, daß** der biometrische Sensor (3) ein kapazitiver Sensor ist.

9. Halbleiterschaltungsanordnung (2) nach einem der Ansprüche 1 bis 8, **dadurch gekennzeichnet, daß** der biometrische Sensor (3) ein optischer Sensor ist.

10. Tragbare Datenträgeranordnung (1) mit biometrischem Sensor (3) zum Erfassen biometrischer Information, mit einer Speicheranordnung (25) zum Speichern von Referenzdaten und mit einer Auswerteeinheit (4) zum Vergleichen von auf der Grundlage der erfassten biometrischen Information ermittelter Verifikationsdaten mit den gespeicherten Referenzdaten, **dadurch gekennzeichnet, daß** der biometrische Sensor (3) und die Auswerteeinheit (4) durch eine Halbleiterschaltungsanordnung (2) nach einem der vorhergehenden Ansprüche realisiert sind.

## Claims

1. A semiconductor circuit arrangement (2), in particular to be installed in a portable data carrier arrangement (1), having a biometric sensor (3) and an evaluation unit (4) for evaluating information delivered by the sensor (3), the semiconductor circuit arrangement (2) comprising at least a first, upper semiconductor circuit layer (5) and at least a further semiconductor circuit layer (6, 6A) disposed below said first semiconductor circuit layer (5), with semiconductor circuit elements of the first semiconductor circuit layer (5) being electroconductively connected to semiconductor circuit elements of the further semiconductor circuit layer (6, 6A), and the first semiconductor circuit layer (5) containing the biometric sensor (3), and the evaluation unit (4) being realized in the further semiconductor circuit layer (6, 6A), **characterized in that** the first semiconductor circuit layer (5) containing the biometric sensor (3) protrudes at least on one side beyond the further semiconductor circuit layer (6, 6A).

2. The semiconductor circuit arrangement (2) according to claim 1, **characterized in that** the first semiconductor circuit layer (5) and the further semiconductor circuit layer (6, 6A) use different semiconductor technologies.

3. The semiconductor circuit arrangement (2) according to any of the previous claims, **characterized in that** the further semiconductor circuit layer (6, 6A) has finer semiconductor structures than the first semiconductor circuit layer.

4. The semiconductor circuit arrangement (2) according to any of the previous claims, **characterized in that** the first semiconductor circuit layer is built up on a plastic substrate (10), and the further semiconductor circuit layer (6, 6A) on a semiconductor substrate (15).

5. The semiconductor circuit arrangement (2) according to claim 4, **characterized in that** the semiconductor substrate (15) is silicon.

6. The semiconductor circuit arrangement (2) according to any of the previous claims, **characterized in that** biometric comparative data are stored in a storage arrangement (25) of the semiconductor circuit arrangement (2), and the evaluation unit (4) compares said biometric comparative data with information received from the biometric sensor (3).

7. The semiconductor circuit arrangement (2) according to any of the previous claims, **characterized in that** connections between semiconductor circuit elements of stacked semiconductor circuit layers (5, 6, 6A) are realized with the help of connections (13) extending vertically through one of the semiconductor circuit layers (5).

8. The semiconductor circuit arrangement (2) according to any of the previous claims, **characterized in that** the biometric sensor (3) is a capacitive sensor.

9. The semiconductor circuit arrangement (2) according to any of claims 1 to 8, **characterized in that** the biometric sensor (3) is an optical sensor.

10. A portable data carrier arrangement (1) having a biometric sensor (3) for capturing biometric information, a storage arrangement (25) for storing reference data, and an evaluation unit (4) for comparing verification data determined on the basis of the captured biometric information with the stored reference data, **characterized in that** the biometric sensor (3) and the evaluation unit (4) are realized by a semiconductor circuit arrangement (2) according to any of the previous claims.

## Revendications

1. Agencement de circuit à semi-conducteurs (2), en particulier pour une installation dans un dispositif portable de support de données (1), comportant un capteur biométrique (3) et une unité d'exploitation (4) pour l'exploitation d'informations délivrées par le capteur (3), dans lequel l'agencement de circuit à semi-conducteurs (2) est constitué d'au moins une première couche supérieure de circuit à semi-conducteurs (5) et d'au moins une couche supplémentaire de circuit à semi-conducteurs (6, 6A) disposée en dessous de la première couche de circuit à semi-conducteurs (5), dans lequel des éléments de circuit à semi-conducteurs de la première couche de circuit à semi-conducteurs (5) sont reliés, de façon électriquement conductrice, avec des éléments de circuit à semi-conducteurs de la couche supplémentaire de circuit à semi-conducteurs (6, 6A), et dans lequel la première couche de circuit à semi-conducteurs (5) contient le capteur biométrique (3), et l'unité d'exploitation (4) est réalisée dans la couche supplémentaire de circuit à semi-conducteurs (6, 6A), **caractérisé en ce que** la première couche de circuit à semi-conducteurs (5), contenant le capteur biométrique (3), dépasse au moins sur un côté de la couche supplémentaire de circuit à semi-conducteurs (6, 6A).

2. Agencement de circuit à semi-conducteurs (2) selon la revendication 1, **caractérisé en ce que** la première couche de circuit à semi-conducteurs (5) et la couche supplémentaire de circuit à semi-conducteurs (6, 6A) utilisent différentes technologies de semi-conducteurs.

3. Agencement de circuit à semi-conducteurs (2) selon l'une des revendications précédentes, **caractérisé en ce que** la couche supplémentaire de circuit à semi-conducteurs (6, 6A) comporte des structures de semi-conducteur plus fines que la première couche de circuit à semi-conducteurs.

4. Agencement de circuit à semi-conducteurs (2) selon l'une des revendications précédentes, **caractérisé en ce que** la première couche de circuit à semi-conducteurs est montée sur un substrat de matière synthétique (10), et la couche supplémentaire de circuit à semi-conducteurs (6, 6A) sur un substrat de semi-conducteur (15).

5. Agencement de circuit à semi-conducteurs (2) selon la revendication 4, **caractérisé en ce que** le substrat de semi-conducteur (15) est du silicium.

6. Agencement de circuit à semi-conducteurs (2) selon l'une des revendications précédentes, **caractérisé en ce que** des données biométriques de comparaison sont stockées dans un dispositif de mémoire (25) de l'agencement de circuit à semi-conducteurs (2), et l'unité d'exploitation (4) compare ces données biométriques de comparaison avec l'information reçue par le capteur biométrique (3).

7. Agencement de circuit à semi-conducteurs (2) selon l'une des revendications précédentes, **caractérisé en ce que** des connexions sont réalisées entre des éléments de circuit à semi-conducteurs de couches de circuit à semi-conducteurs disposées l'une au-dessus de l'autre (5, 6, 6A) à l'aide de connexions (13) traversant verticalement une des couches de circuit à semi-conducteurs (5).

8. Agencement de circuit à semi-conducteurs (2) selon l'une des revendications précédentes, **caractérisé en ce que** le capteur biométrique (3) est un capteur capacitif.

9. Agencement de circuit à semi-conducteurs (2) selon l'une des revendications 1 à 8, **caractérisé en ce que** le capteur biométrique (3) est un capteur optique.

10. Dispositif portable de support de données (1), comportant un capteur biométrique (3) pour la saisie d'informations biométriques, un dispositif de mémoire (25) pour le stockage de données de référence, et une unité d'exploitation (4) pour établir une comparaison entre des données de vérification déterminées sur la base de l'information biométrique saisie et les données de référence stockées, **caractérisé en ce que** le capteur biométrique (3) et l'unité d'exploitation (4) sont réalisés au moyen d'un agencement de circuit à semi-conducteurs (2) selon l'une des revendications précédentes.
